# EUROPEAN PATENT APPLICATION

(11) **EP 2 535 541 A1**
(43) Date of publication of application: **19.12.2012**
(21) Application number: 11742129.7
(22) Date of filing: 28.01.2011
(51) Int. Cl.: F02C 7/05

(54) **AIRCRAFT**

(30) Priority: 10.02.2010 JP 2010027859
(71) Applicant: Yuugengaisya Okudo Yosetsu, Tokyo 124-0022 (JP); Matsumoto, Susumu, Funabashi-shi, Chiba 273-0851 (JP); Sato, Chikako, Chiba-shi, Chiba 262-0015 (JP)
(72) Inventor: MATSUMOTO Susumu, Funabashi-shi Chiba 273-0851 (JP); SATO Chikako, Chiba-shi Chiba 262-0015 (JP); ITO Hiroshi, Tokyo 124-0022 (JP)
(74) Representative: Marshall, Caroline
(86) International application number: PCT/JP2011/051738
(87) International publication number: WO 2011/099383

(57) **Abstract**

A bird knocking-off rod of a bird knocking-off device is disposed outside a jet engine, in front of an air inlet of the jet engine and capable of rotating with a rotation area that is larger than an opening area of the air inlet of the jet engine. The rotary drive unit contains a rotary drive source and is capable of rotationally driving the bird knocking-off rod independently of rotation of the jet engine. Thus, bird strike against aircraft can be prevented.

## Description

### [TECHNICAL FIELD]

The present invention relates to an aircraft having a jet engine, more particularly, relates to a technology of preventing bird strike against aircraft.

### [BACKGROUND ART]

Bird strike against aircraft is a phenomenon that tends to occur during takeoff operations (takeoff run and immediately after takeoff) in which flight is unstable or during landing operations in which speed is relatively low and altitude is low. This is an important issue that has to be solved for safe operation of aircraft. In 2006, 1233 cases of bird strike against aircraft were reported in Japan. For instance, 118 cases in Tokyo International Airport, 94 cases in Kobe Airport. It is said that in Japan alone, the loss due to the resulting engine damage and return of the aircraft to the airport is about a few hundred million yen per year. For prevention thereof, individual airlines and airports have taken various measures, but there is no effective measure for now.

As means for preventing bird strike, Patent Document 1 discloses an air inlet structure of a jet engine in which a cutting blade for cutting foreign objects entering an inlet duct is provided at a tip of a strut directed forward of the engine. In short, the technology disclosed in Patent Document 1 is intended to reduce the impact on the strut by "mincing" birds and not intended to prevent bird strike itself.

### [RELATED ART DOCUMENTS]

### [PATENT DOCUMENTS]

Patent Document 1: Japanese patent application publication No. 2007-23857

### [DISCROSURE OF THE INVENTION]

### [PROBLEM TO BE SOLVED BY THE INVENTION]

It is an object of the present invention to provide an aircraft having a jet engine that is effective in preventing bird strike.

### [MEANS TO SOLVE THE PROBLEM]

In order to attain the above object, an aircraft according to the present invention has a jet engine provided with a bird knocking-off device. The bird knocking-off device has a bird knocking-off rod and a rotary drive unit. The bird knocking-off rod is disposed outside the jet engine, in front of an air inlet of the jet engine and capable of rotating with a rotation area that is larger than an opening area of the air inlet of the jet engine. The rotary drive unit is capable of rotationally driving the bird knocking-off rod.

In the aircraft according to the present invention, as described above, the jet engine is provided with the bird knocking-off device, and the bird knocking-off device has the bird knocking-off rod, and the bird knocking-off rod is disposed outside the jet engine, in front of the air inlet of the jet engine and capable of rotating with a rotation area that is larger than an opening area of the air inlet of the jet engine. Therefore, birds approaching the air inlet of the jet engine can be knocked off and removed by the rotating bird knocking-off rod before they are sucked in, thereby preventing bird strike.

The bird knocking-off rod can be rotationally driven by the rotary drive unit. The rotary drive unit may use rotation of the jet engine and transmit it to the bird knocking-off rod or may have a rotary drive source such as motor and be disposed independently of the jet engine.

In the case where the rotary drive unit should be constructed to use rotation of the jet engine and transmit it to the bird knocking-off rod, a clutch mechanism can be provided between the jet engine and the bird knocking-off rod so that only when necessary, the rotation of the jet engine can be transmitted to the bird knocking-off rod for rotation thereof through the clutch mechanism. There may be one or two or more bird knocking-off rods.

### [EFFECT OF THE INVENTION]

According to the present invention, as has been described above, it is possible to provide an aircraft having a jet engine that is effective in preventing bird strike.

Other objects, configurations and advantages of the present invention will be described in more detail with reference to the accompanying drawings. The accompanying drawings are mere examples.

### [BRIEF DESCRIPTION OF THE DRAWINGS]

Fig. 1 is a partially cut-away view showing a part of an aircraft according to the present invention.
Fig. 2 is a drawing in which the aircraft shown in Fig. 1 is seen from an air inlet side.
Fig. 3 is a drawing showing another embodiment according to the present invention.
Fig. 4 is a partially cut-away view showing a part of another embodiment of an aircraft according to the present invention.

### [BEST MODE FOR IMPLEMENTING THE INVENTION]

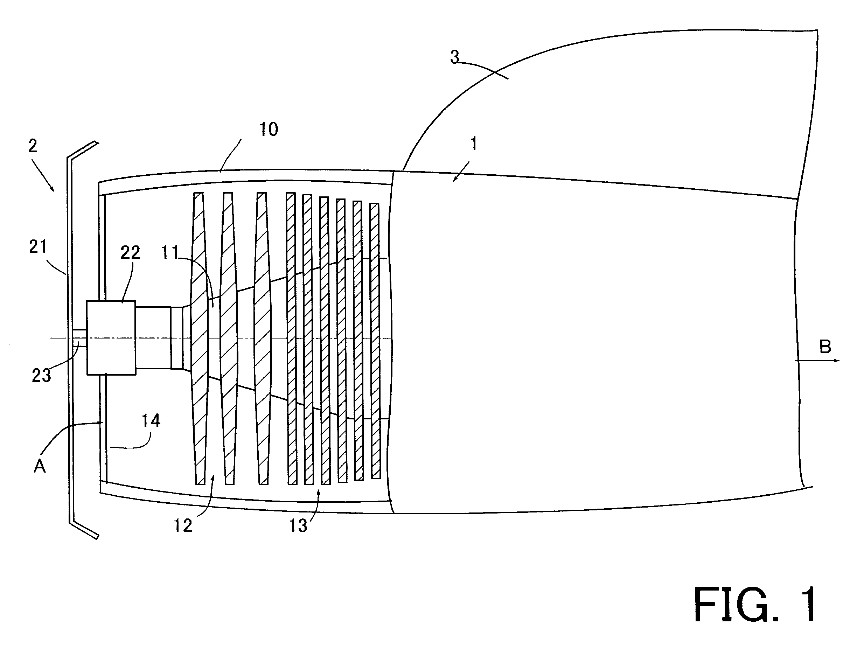

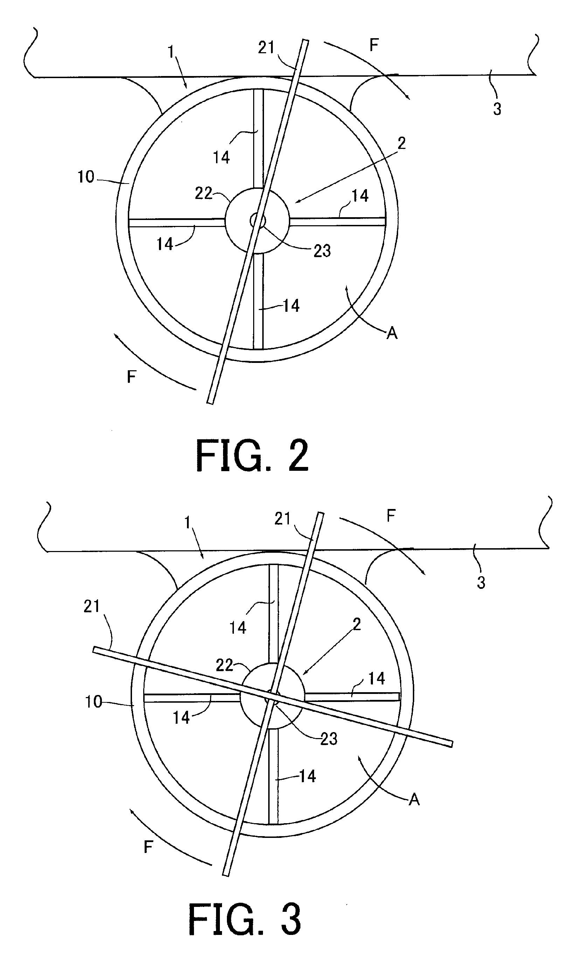

Referring to Figs. 1 and 2, an aircraft according to the present invention has a jet engine 1. The jet engine 1 is attached to the aircraft at a lower surface of a wing 3 or the like. The whole picture of the aircraft having the jet engine 1, the jet engine 1 mounting structure, the internal structure of the jet engine 1 and so on are well known and therefore do not need description. For example, the jet engine 1 has a structure shown in Fig. 1, in which from the side of an air inlet A to an air outlet B at the opposite side, an air intake fan 12, a compressor 13, a combustion chamber (not shown), a turbine (not shown) and the air outlet are arranged in order.

In the present invention, the jet engine 1 has a bird knocking-off device 2. The bird knocking-off device 2 has a bird knocking-off rod 21 and a rotary drive unit 22. The bird knocking-off rod 21 is disposed outside the jet engine 1, in front of the air inlet A of the jet engine 1 and capable of rotating in a direction indicated by an arrow F with a rotation area that is larger than an opening area of the air inlet A of the jet engine 1. That is, the bird knocking-off rod 21 is designed to have such a length that its both ends are located outside the outer periphery of an outer cover 10 of the jet engine 1. The rotary drive unit 22 is capable of rotationally driving the bird knocking-off rod 21 with a rotary shaft 23.

In the aircraft according to the present invention, as described above, the jet engine 1 is provided with the bird knocking-off device 2. The bird knocking-off device 2 has the bird knocking-off rod 21, and the bird knocking-off rod 21 is disposed outside the jet engine 1, in front of the air inlet A of the jet engine 1 and capable of rotating with a rotation area that is larger than an opening area of the air inlet A of the jet engine 1. Therefore, birds approaching the air inlet A of the jet engine 1 can be knocked off and removed by the rotating bird knocking-off rod 21 before they are sucked in, thereby preventing bird strike.

The bird knocking-off rod 21 can be rotationally driven by the rotary drive unit 22. In the embodiment of Figs. 1 and 2, the rotary drive unit 22 uses rotation of a rotating body 11 of the jet engine 1 and transmits it to the bird knocking-off rod 21. In this case, a clutch mechanism can be provided between the jet engine 1 and the bird knocking-off rod 21 so that only when necessary, the rotation of the jet engine 1 can be transmitted to the bird knocking-off rod 21 for rotation thereof through the clutch mechanism. Bird strike against aircraft is a phenomenon that tends to occur during takeoff operations (takeoff run and immediately after takeoff) or during landing operations in which speed is relatively low and altitude is low, but the phenomenon does not happen during stable, high-altitude flight. Therefore, the rotation of the jet engine 1 is transmitted to the bird knocking-off rod 21 through the clutch mechanism provided in the rotary drive unit 22 only during takeoff operations or landing operations, but the clutch mechanism provided in the rotary drive unit 22 is turned off during stable, high-altitude flight so as not to transmit the rotation of the jet engine 1 to the bird knocking-off rod 21. This makes it possible to avoid energy loss and a decrease in operational efficiency due to the bird knocking-off device 2. In order to enable such movements, preferably, the rotary drive unit 22 of the bird knocking-off device 2 is attached to the outer cover 10 of the jet engine 1 with a support 14 or the like.

The bird knocking-off rod 21 may have a circular or polygonal section or may be in the form of a plate or blade. Preferable materials are high-strength ones such as a titanium alloy. The embodiment of Figs. 1 and 2 has a single bird knocking-off rod 21, but there may be two or more rods as shown in Fig. 3.

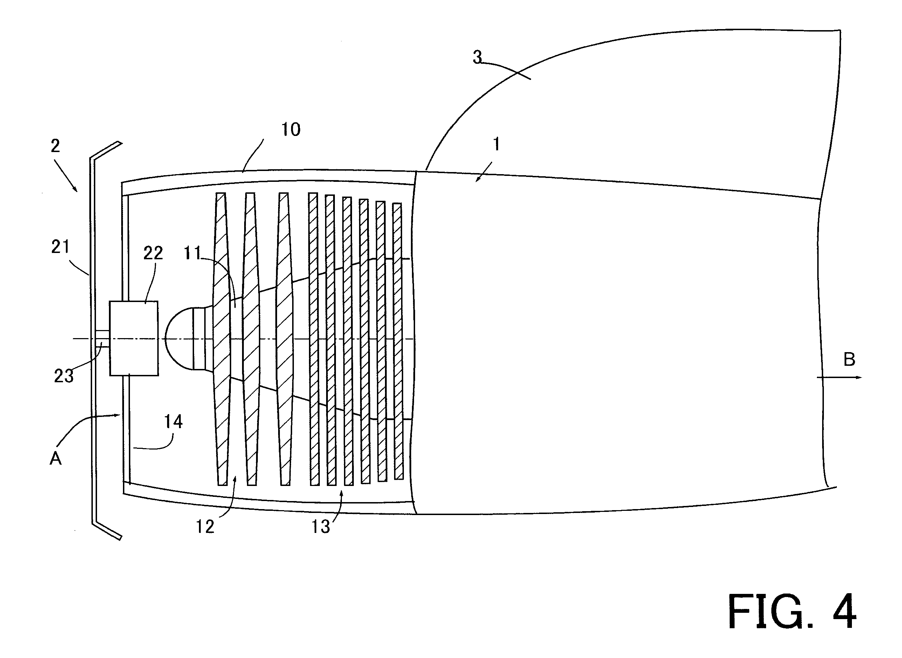

Referring to Fig. 4 showing another embodiment of an aircraft according to the present invention, the rotary drive unit 22 is disposed in front of the rotating body 1 of the jet engine in a separated, spaced relationship from the rotating body 11 and suspended from the outer cover 10 of the jet engine 1 with the support 14. The rotary drive unit 22 contains a rotary drive source such as motor and rotationally drives the bird knocking-off rod 21 independently of the rotation of the jet engine 1. With this configuration, the efficiency can be improved because the bird knocking-off device 2 does not become rotational load on the jet engine 1, and flight operating system can be less affected because the operation of the bird knocking-off device 2 can be performed independently of the jet engine 1.

The present invention has been described in detail above with reference to preferred embodiments, but obviously those skilled in the art could easily devise various modifications based on the basic technical concepts underlying the invention and teachings disclosed herein.

### [EXPLANATIONS OF REFERRENCE NUMERALS]

- 1: Jet Engine
- 2: Bird Knocking-Off Device
- 21: Bird Knocking-Off Rod
- 22: Rotary Drive Unit

## Claims

1. An aircraft comprising a jet engine, the jet engine including a bird knocking-off device, the bird knocking-off device having a bird knocking-off rod and a rotary drive unit,
the bird knocking-off rod being disposed outside the jet engine, in front of an air inlet of the jet engine and capable of rotating with a rotation area that is larger than an opening area of the air inlet of the jet engine,
the rotary drive unit containing a rotary drive source and being capable of rotationally driving the bird knocking-off rod independently of rotation of the jet engine.
